Europäisches Patentamt

European Patent Office

Office européen des brevets

(19)

(11) Publication number: **0 400 691**

**A1**

(12) **EUROPEAN PATENT APPLICATION**

(21) Application number: **90114564.9**

(22) Date of filing: **10.02.87**

(51) Int. Cl.⁵: **G05D 1/06**

(30) Priority: **13.02.86 US 829731**

(43) Date of publication of application:
**05.12.90 Bulletin 90/49**

(60) Publication number of the earlier application in accordance with Art.76 EPC: **0 256 124**

(84) Designated Contracting States:
**BE CH DE FR GB IT LI NL SE**

(71) Applicant: **SUNDSTRAND DATA CONTROL, INC.**
**15001 N.E. 36th Street P.O. Box 97001**
**Redmond, WA 98073-9701(US)**

(72) Inventor: **Muller, Hans R.**
**10567 - 158th Avenue, N.E.**
**Redmond, Washington 98052(US)**
Inventor: **Glover, John H., c/o Sundstrand Corporation**
**4949 Harrison Avenue, PO Box 7003**
**Rockford, Illinois 61125-7003(US)**

(74) Representative: **SERJEANTS**
**25, The Crescent King Street**
**Leicester, LE1 6RX(GB)**

(54) **Wind shear detection and alerting system.**

(57) A wind shear detection and warning system for an aircraft is responsive to a wind shear signal to provide a first warning if the head shear exceeds a first reference level and a second warning if the tail shear exceeds a second reference level. The system may be made more sensitive at low altitudes by reducing the time constant of an averaging filter through which the wind shear signal is passed.

EP 0 400 691 A1

## Field of the Invention

This invention relates generally to wind shear detection systems, and more particularly to airborne wind shear detection systems for alerting the pilot of a wind shear condition if the aircraft penetrates a wind shear condition of sufficient force to pose a hazard to the aircraft.

This invention is fully disclosed in EP A 256124 from which this Application is divided.

## Description of Prior Art

Various wind shear detection and warning systems are known. One such system is disclosed in European Patent No.0125087, in which on board measurements of various aircraft flight parameters are used to provide signals representing wind shear components in the horizontal and vertical directions, and their rates of change with time. A warning of moderate wind shear is given if either wind shear signal is sustained above a predetermined level and a warning of severe wind shear is given if increasing tail shear is detected within a fixed period thereafter.

## Summary of the Invention

The invention provides a wind shear detection and warning system for an aircraft comprising means for providing a signal that is a measure of the wind shear encountered by the aircraft; means responsive to the wind shear signal for providing a first wind shear warning indicative of a headshear condition when the wind shear signal exceeds a first reference level; and means responsive to the wind shear signal for providing a second wind shear warning indicative of a tailshear condition when the wind shear signal exceeds a second reference level.

In a preferred embodiment, the system of the invention further comprises means responsive to a radio altitude signal to make the system more sensitive at low altitudes and less sensitive at high altitudes.

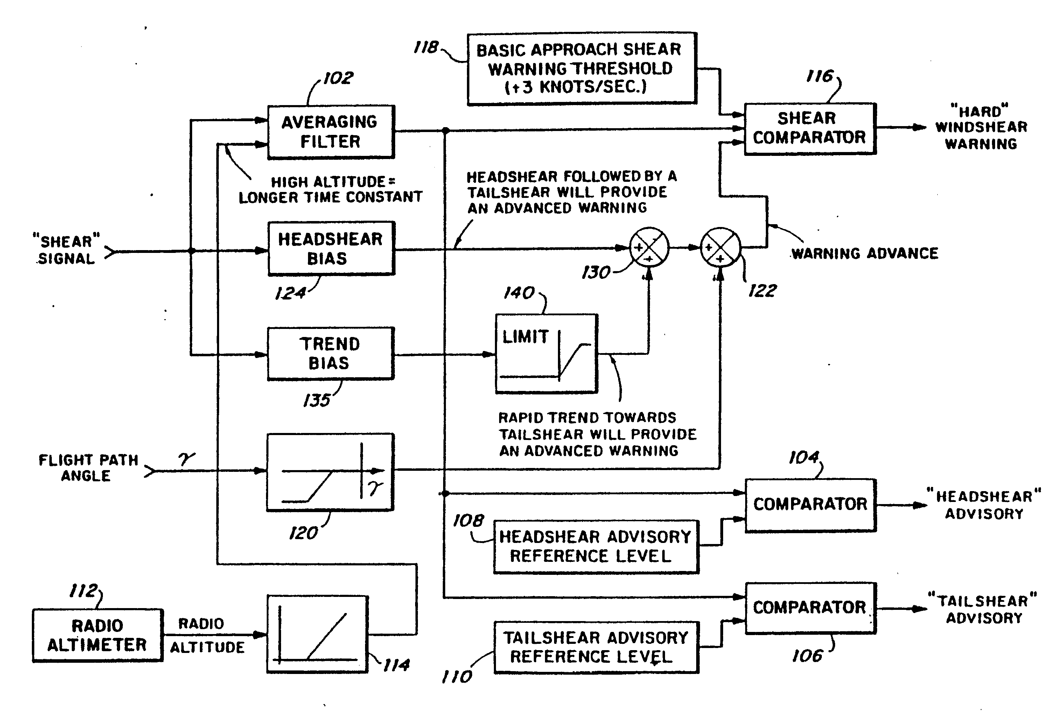

## Description of the drawing

The Figure is a block diagram illustrating logic circuitry incorporating the present invention that is responsive to a 'shear' signal for generating warning and advisory signals.

In the Figure, the logic circuit receives as an input a 'shear' signal, representative of the wind shear encountered by the aircraft. Such a signal may suitably be provided by the wind shear detection system of EP A 256124. The 'shear' signal is applied to an averaging filter 102 whose output then is applied to a pair of comparators 104 and 106. The comparators 104 and 106 compare the filtered 'shear' signal with a pair of reference signals, namely, a head shear advisory level and a tail shear advisory level obtained from a head shear advisory reference level circuit 108 and a tail shear advisory reference level circuit 110. If either reference level is exceeded by the filtered shear signal, either a head shear advisory or a tail shear advisory message will be generated. Such an advisory message would simply advise the pilot that a wind shear situation exists without requiring him to take any immediate action such as initiating a go-around. The message could be given in the form of a voice warning, with a head shear message meaning that the type of shear is such that it makes the airplane climb like an increasing head wind or an updraft would do. A tail shear message would mean that the shear condition is such that it tends to make the aircraft sink as would a decreasing headwind, an increasing tailwind or a downdraft. Such an advisory indication would be advantageous in a reversing shear type of situation since a head shear followed by a tail shear is particularly hazardous. The system could also be made responsive to radio altitude to make the system more sensitive near the ground and less sensitive at higher altitudes. For example, the time constant of the averaging filter could be adjusted as a function of altitude, with the time constant being made longer at high altitudes and shorter at low altitudes to reduce response time. In the block diagram illustrated in the Figure, a radio altitude signal from a radio altimeter 112 is applied to a function generator 114 to provide a signal which alters the time constant of the averaging filter 102 as a function of radio altitude.

In addition, by utilizing a comparator such as comparator 116, the criteria at which a wind shear warning would be given could be altered as a function of various flight parameters. For example a hard wind shear warning requiring the pilot to take immediate action would be generated when the wind shear exceeds a predetermined warning reference, such as, for example, 3 knots per second as provided by a basic approach shear warning threshold reference circuit 118. However, the comparator could be biased so that the warning would be given before the basic warning threshold was crossed under particularly hazardous conditions. For example, the warning could be advanced as a function of flight path angle, with the warning being increased for unusually steep flight path angles. For example, by applying the flight path angle signal $\gamma$ to a function generator 120 a biasing signal that is a function of flight path angle could be generated. This signal could be used to advance the warning by applying the bias signal to the comparator 116 via a summing junction 122.

As previously stated, one particularly hazardous condition exists when a head shear is followed by a tail shear because such a condition results in a rapid loss of air speed that could cause the aircraft to stall if appropriate action is not taken. Thus, a head shear bias circuit 124 may be provided to advance the warning in the event of a head shear followed by a tail shear. In addition, the warning may be advanced as a function of an increasing tail shear trend. For example, the 'shear' signal could be differentiated by a trend bias circuit 135 to provide a trend bias signal to a limiter 140, which would pass only increasing tail shear trends.

The output from limiter 140 could be combined with the output of the head shear bias circuit 124 at summing junction 130 before passing to the comparator 116.

## Claims

1. A wind shear detection and warning system for an aircraft comprising:
means for providing a signal that is a measure of the wind shear encountered by the aircraft;
means (104) responsive to the wind shear signal for providing a first wind shear warning indicative of a headshear condition when the wind shear signal exceeds a first reference level (108); and
means (106) responsive to the wind shear signal for providing a second wind shear warning indicative of a tailshear condition when the wind shear signal exceeds a second reference level (110).

2. A system according to claim 1 wherein the first and second wind shear warnings are voice warnings.

3. A system according to claim 11 or claim 2, further comprising:
means (112) for providing a signal that is a measure of the radio altitude of the aircraft; and
means (102) responsive to the radio altitude signal to make the system more sensitive at low altitudes and less sensitive at high altitudes.

4. A system according to claim 3, wherein the wind shear signal passes through an averaging filter (102) with a variable time constant, the system being made more sensitive at low altitudes by decreasing the time constant of the filter and less sensitive at high altitudes by increasing the time constant of the filter.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| D,Y | EP-A-0125087 (SPERRY CORP.)<br>* page 4, line 28 – page 21, line 17; figures 1-9 * | 1 | G05D1/06 |
| Y | EP-A-0005662 (SOCIETE FRANCAISE D'EQUIPEMENTS POUR LA NAVIGATION AERIENNE)<br>* page 3, line 22 – page 9, line 6; figure 1 * | 1 | |
| Y | US-A-4079905 (L.M.GREENE)<br>* column 2, line 2 – column 6, line 13; figures 1-5 * | 1, 2 | |
| Y,P | WO-A-8601622 (SUNSTRAND DATA CONTROL ,INC.)<br>* page 3, line 13 – page 8, line 20; figures 1, 2 * | 1, 2 | |
| A | US-A-4189777 (D. KUNTMAN)<br>* column 2, line 54 – column 6, line 13; figures 1-5 * | 1-4 | |
| A | GB-A-1586839 (J.H.BLISS)<br>* page 2, lines 100 – 9; figure 71 * | 1, 3, 4 | TECHNICAL FIELDS SEARCHED (Int. Cl.4 ) |
| E | EP-A-0229197 (THE BOEING COMP.)<br>* column 2, line 29 – column 10, line 34; figures 1-4b * | 1-4 | G05D<br>B64D<br>G01C<br>G01P |

The present search report has been drawn up for all claims

| Place of search | Date of completion of the search | Examiner |
|---|---|---|
| THE HAGUE | 02 OCTOBER 1990 | FOURRICHON P.M.L. |

EPO FORM 1503 03.82 (P0401)